# EUROPEAN PATENT APPLICATION

(11) **EP 0 586 782 A1**
(43) Date of publication of application: **16.03.1994**
(21) Application number: 93102020.0
(22) Date of filing: 10.02.1993
(51) Int. Cl.: C04B 26/14, C08K 3/00

(54) **A colored grout composition**

(30) Priority: 20.08.1992 US 932458
(71) Applicant: LATICRETE INTERNATIONAL INC., Bethany, Connecticut (US)
(72) Inventor: Rooshenas, Rezvan, New Haven, CT 06511 (US); Lu, Daniel C., Bethany, CT 06524 (US)
(74) Representative: Vetter, Ewald Otto, Dipl.-Ing.

(57) **Abstract**

The present invention features an indelibly colored grout composition and a method of making it. The grout of the invention mixes pre-colored materials such as stone, sand, plastic or ceramic aggregates with a resin binder. In the case of ceramics, the materials are pre-colored and color-fast, so that they resist fading and attack from stains and chemicals. The color-fast materials can be natural or man-made and, if man-made, can be pretreated, and permanently coated. In the case of stone, the natural colors are permanently inherent in the stone matrix and will not fade or leach out. An ultraviolet blocker is also added to the mixture to prevent the binder from yellowing when exposed to sunlight. This admixture also contains an anti-oxidant to prevent the change of color by reason of oxidation. A thixotropic agent is added to provide the desired consistancy, which eases the workability and application of the grout. The mixture may also contain an air-release agent. The pre-colored aggregates may be of a single color; however, it has been found to be advantageous to mix differently colored aggregates with the binder. Such a multi-colored or speckled grout gives the appearance of a single color when viewed from an extended distance; it also blends more readily with multi-colored tiles and masonry materials.

## Description

The present invention relates to a permanently colored grout composition, and, more particularly, to a multicolored or speckled grout composition having colors that are essentially indelible and stain-resistant. The present invention also substantially reduces the problem of tile/stone staining during grouting due to traditional colorants such as dyes or pigments.

### BACKGROUND OF THE INVENTION

There are many different types of grouts. One type is know from letters patent DE 37 07 712 C2. There are grouts for masonry, as well as grouts for tile, etc. Tile grouts come in many solid colors. During the installation of tile, grouts are often selected from a set of colored sticks. A longstanding problem with the tile grouts is their inabililty to provide consistent colors. Tile grouts are not only susceptible to staining over time, but their actual colors are often different than those shown on the sample sticks. When cracked or damaged tile is replaced,the color of the replacement grout does not always match the original grout color. The difference is usually the result of many factors, including the fading of the original color (due to oxidation of the color pigments) and inconsistencies in the manufacture, application and cleaning of the grout materials.

One reason for inconsistent grout colors, is that the grouts are available only in solid colors, albeit a wide variety of solid colors. Shade differences or color inconsistencies, whatever their origin, are vastly more noticeable in solid colors than in multi-colored mixtures.

Solid colors also present another problem. In the use of multi-colored or patterned tiles, solid color grout will often be esthetically compatible with some colors of the tile, while being incompatible with others.

Still another reason that grouts display color inconsistencies is that the depth of the grout placement varies, resulting in differences in color perception.

Yet another reason why grout color seems to vary is that slightly different amounts of water are used from batch to batch in the mixing the grout.

The present invention has discovered that it is possible to provide a speckled or multi-colored grout that, upon an extended view, will appear to provide a solid color. Such a multi-colored grout provides a solution to the aforementioned problems inherent in solid color grout.

The different speckles or bits of color of the grout of this invention provide a blending of colors to provide the perception of solid color upon extended view, as aforementioned. Despite the appearance of solid color, the different bits provide an improved compatibility with multi-colored tiles. The different colored speckles of the inventive grout have been found to actually accent and highlight the different colors of the tile.

The grout of this invention utilizes a combination of raw materials and processes that provide superior color consistency, reduced color fading, improved resistance to staining and chemical attack and reduced staining of the tile and stone itself, while also concealing dirt.

The grout of this invention provides a new method of colored grout manufacture. Dyes, pigments or coloring agents are not separately blended into the grout formula to provide the resultant coloring, as is presently done in standard grout manufacture. Rather, the invention uses colored stone, pre-colored ceramics or other color-fast materials to provide the colors. These pre-colored materials are then mixed with anti-oxidants, ultraviolet (UV) blockers and other improved curing agents to provide a superior, color-fast, color-consistent, grout product.

The grout of the invention utilizes clear epoxy resins that replace the opaque cements in conventional tile grout. These clear epoxy resins are also used in place of the colored cements used in masonry grouts. The resins provide superior hardening characteristics that make the grout less susceptible to attack by chemicals, stains and other penetrating materials. The epoxy resins of the invention are clear, in order that the color provided by the stone or ceramic particles does not become distorted or shaded. In addition, the epoxy resins are not prone to the yellowing tendencies usually associated with epoxy resin binders.

### SUMMARY OF THE INVENTION

In accordance with the present invention, there is provided an indelibly colored grout composition and method of making same. The grout of the invention mixes pre-colored materials such as stone, sand or ceramic aggregates with a resin binder. In the case of ceramics, the materials are pre-colored and color-fast, so that they resist fading and attack from stains and chemicals. The color-fast materials are generally pretreated and permanently coated. In the case of stone, the natural colors are permanently inherent in the stone matrix and will not fade or leach out. An ultraviolet blocker is also added to the mixture to prevent the colors from yellowing when exposed to sunlight. This admixture also contains an anti-oxidant to prevent the change of color by reason of oxidation. A thixotropic agent is added to adjust flowability, which enhances workability and performance of the grout. The mixture may also contain an air-release agent. The pre-colored aggregates may be of a single color; however, it has been found to be advantageous to mix differently colored aggregates with the binder. Such a multi-colored or speckled grout gives the appearance of a single color when viewed from an extended distance; it also blends more readily with multi-colored tiles and masonry materials.

### DESCRIPTION OF THE PREFERRED EMBODIMENT

Generally speaking, the invention features a new grout manufacture and a new composition article resulting therefrom. Traditional methods of grout manufacture have always added pigments, color fillers, coloring agents, dyes, etc., to the grout mixture. By eliminating the need to add coloring agents, the invention creates color grout that has color consistency and color-fast characteristics. The grout of this invention is unique, because the grout aggregates are pretreated, precoated and/or permanently pre-colored. In addition, the grout of this invention features a new grout product containing speckled or multi-colored aggregates dispersed in the grout binder.

Typical grout compositions of this invention are illustrated in Table I, shown below:

**TABLE I**

| Ingredients | Compositions* | | |
|---|---|---|---|
| | A | B | C |
| Epoxy Resin Bisphenol A Type^{a} | 50-75 | 30-45 | 50-75 |
| Novolac Type Epoxy Resin^{b} | - | 10-20 | - |
| Epoxy (Bisphenol F Resin)^{c} | 0-20 | 0-20 | 0-20 |
| Reactive Diluent^{d} | 5-30 | 5-35 | 5-30 |
| Benzylalcohol | 2-10 | 2-10 | 2-10 |
| U.V. Stabilizer^{e} | 0.1- 1 | 0.1- 1 | 0.1- 1 |
| Polyamide^{f} | 35-55 | 35-55 | 20-35 |
| Cycloaliphaticamine^{g} | 0-30 | 0-30 | 15-30 |
| Anti-Oxidant^{h} | 0.5- 3 | 0.5- 3 | 0.5- 3 |
| Precipitated Calcium Carbonate | 10-30 | 10-30 | 10-30 |
| Pigment & Sand in one componentⁱ | 200-1000 | 200-1000 | 200-1000 |

| | | | |
|---|---|---|---|
| *Note: All ingredients are listed in parts by weight. | | | |
| Ingredients: a - can be Ciba-Geigy ARALDITE formula GY6004 | | | |
| b - can be Ciba-Geigy ARALDITE formula PY307 | | | |
| c - can be Ciba-Geigy ARALDITE formula 6010 | | | |
| d - can be Rhone-Poulenc HELOXY formula 7 | | | |
| e - can be Ciba-Geigy TINUVIN formula 1130, which is part of a family of chemicals that is a reaction product of beta-(3-(2H-benzotriazol-2-YL)-4-hydroxy-5-tert- butylphenyl)propionic acid, methyl ester and polyethylene glycol | | | |
| f - can be Henkel VERSAMID formula 125 | | | |
| g - can be Air Products AMICURE formula PACM | | | |
| h - can be Ciba-Geigy TINUVIN formula 292 hindered amine light stabilizer | | | |
| i - can be 3M Corp. COLORQUARTZ | | | |

A sufficient quantity of thixotropic agent can be added to enhance flowability, such as amorphous silica. Moreover, a sufficient quantity of an air-release agent, such as a polyether modified methylalkylpolysiloxane copolymer, can be added to prevent air entrapment.

The grout of the invention can be used in the placement of ceramic tiles, stone, or as a masonry filler. The binder can comprise Portland cement, calcium aluminate, magnesium oxychoride as cementitious binders.

Aggregates can be precolored and/or pretreated according to those used in color quartz aggregate, for example manufactured by the 3M Corp.

Stone aggregates as used in the grout of this invention should be chosen for their consistency of color and reproducibility.

Since modifications can be made to the present compositions, and they can be varied to fit particular operating requirements and environments, it will be apparent to those skilled in the art that the described invention is not considered limited to the examples chosen for purposes of disclosure, and covers all changes and modifications which do not constitute departures from the true spirit and scope of this invention. For example, the grout of this invention can work sufficiently well with other clear binding agents other than epoxy resins.

Having thus described the invention, what is desired to be protected by Letters Patent is presented in the subsequently appended claims.

## Claims

1. A colored grout composition comprising in admixutre an indelibly or permanently colored aggregate combined with at least one binding resin, wherein it is single colored, multicolored or speckled and wherein said binding resin further consists of at least one of the following:
a) at least one curing agent;
b) an ultraviolet blocking agent;
c) an anti-oxidant;
d) a thixotropic agent; and
e) an air-release agent.

2. The grout composition of claim 1, wherein said at least one curing agent comprises cycloaliphaticamine.

3. The grout composition of anyone of the preceding claims, wherein said U.V.blocking agent comprises a reaction product of beta-(3-(2H-benzotriazol-2-YL)-4-hydroxy-5-tert-butylphenyl)propionic acid, methyl ester and polyethylene glycol.

4. The grout composition of anyone of the preceding claims, wherein said anti-oxidant can be a hindered amine having a light stabilizer (HALS) function.

5. The grout composition of anyone of the preceding claims,wherein said thixotropic agent comprises amorphous silica.

6. The grout composition of anyone of the preceding claims,wherein said air-release agent comprises a polyether modified methylalkylpolysiloxane copolymer.

7. The grout composition in of anyone of the preceding claims, wherein said binder contains a thermosetting resin.

8. The grout composition in accordance with claims 7, wherein said termoseting resin comprises an epoxy-based resin and an amine curing agent.

9. The grout composition in of anyone of the preceding claims, wherein said binder is clear.

10. The grout Composition of anyone of the claims 1 to 6,
wherein said binder consists of at least one of the following materials: cement, calcium aluminate and magnesium oxychloride.

11. The composition in accordance with claims 10, wherein said binder consists of Portland cement.

12. The grout composition according to anyone of the claims 1 to 9 comprising in admixture:
a permanently colored aggregate in a range of approximately 200 to 1000 parts by weight;
a clear resin binder in a range of approximately 80 to 210 parts by weight; and
a anti-oxidant / ultraviolet stabilizing agent in a range of approximately 0,6 to 4 parts by weight;

13. The colored grout composition of claim 12, wherein said resin binder comprises an epoxy resin and an amine curing agent.
